# NEUE EUROPÄISCHE PATENTSCHRIFT

(11) **EP 2 633 747 B2**
(45) Veröffentlichungstag und Bekanntmachung des Hinweises auf die Entscheidung über den Einspruch: **15.01.2020**
(45) Hinweis auf die Patenterteilung: 17.05.2017
(21) Anmeldenummer: 13152366.4
(22) Anmeldetag: 23.01.2013
(51) Int. Cl.: A01C 5/06, A01B 19/02

(54) **Striegeleinrichtung für eine landwirtschaftliche Bodenbearbeitungsvorrichtung**
Tine device for an agricultural soil cultivation device
Dispositif d'étrille pour un dispositif de traitement de sol agricole

(30) Priorität: 29.02.2012 DE 102012101641
(43) Veröffentlichungstag der Anmeldung: 04.09.2013
(73) Patentinhaber: Kverneland AS, 4355 Kvernaland (NO)
(72) Erfinder: Beier, Carsten, 33154 Salzkotten (DE)
(74) Vertreter: Schweiger, Johannes

(56) Entgegenhaltungen:
- EP-A1- 1 961 283
- WO-A1-02/49141
- WO-A1-99/22578
- DE-A1- 3 505 547
- US-A- 3 100 018
- US-A- 3 613 801
- US-A- 5 143 160
- US-A- 5 492 182

## Beschreibung

Die vorliegende Erfindung betrifft eine Striegeleinrichtung für eine landwirtschaftliche Bodenbearbeitungsvorrichtung gemäß Anspruch 1 sowie eine Bodenbearbeitungsmaschine gemäß Anspruch 9.

Im Stand der Technik sind Striegelvorrichtungen gemäß DE 10 2009 008 244 A1 bekannt, die eine Mehrzahl von Striegelelementen aufweisen, die mittels Striegellagern an einem balkenförmigen Striegelträger gelagert sind. Die DE 10 2008 045 635 A1 offenbart eine Sämaschine mit einem Scharstriegelhalter, der eine Höheneinstellvorrichtung und eine davon unabhängig betätigbare Winkeleinstellvorrichtung zur voneinander unabhängigen Einstellung von Höhe und Neigungswinkel des Striegelelements aufweist. Die Druckschrift US 3,100,018 offenbart eine landwirtschaftliche Bodenbearbeitungsvorrichtung mit einem Stellmittel zur Schwenkung eines Striegelschwenkarms.

Demnach sind im Stand der Technik zwar diverse Verstellmöglichkeiten für Striegelelemente bekannt. Diese sind jedoch sehr umständlich in der Bedienung, so dass eine Verstellung der Höhe oder Winkellage von Striegelelementen zeitaufwendig ist und eine Vielzahl von Arbeitsschritten erforderlich macht.

Aufgabe der vorliegenden Erfindung ist es daher, die Verstellung von Striegelelementen und die Funktionalität von Striegeleinrichtungen zu verbessern, damit eine optimale Anpassung an die Bodenbeschaffenheit und sonstige Einflussfaktoren ermöglicht wird.

Diese Aufgabe wird mit einer Striegeleinrichtung mit den Merkmalen des Anspruchs 1, sowie einer Bodenbearbeitungsmaschine mit den Merkmalen des Anspruchs 7 gelöst. Vorteilhafte Weiterbildungen der Erfindung sind in den Unteransprüchen angegeben. In den Rahmen der Erfindung fallen sämtliche Kombinationen aus zumindest zwei in der Beschreibung, den Ansprüchen und/oder den Figuren offenbarten Merkmalen, wobei bei angegebenen Wertebereichen auch innerhalb des Wertebereichs liegende Zwischenwerte als mitoffenbart gelten.

Grundidee der vorliegenden Erfindung ist es, eine Striegeleinrichtung derart auszubilden, dass eine automatische Verstellung der Höhe (gegenüber dem Ackerboden) und/oder Winkellage der Striegelelemente vorgesehen ist. Die Höhen- und/oder Winkeleinstellung erfolgt erfindungsgemäß durch Schwenkung von die Striegelelemente aufnehmenden Striegelschwenkarme um eine Schwenkachse, und zwar durch stufenlos arbeitende, insbesondere hydraulisch und/oder elektrisch und/oder pneumatisch angetriebene, Stellmittel. Soweit die Stellmittel eine stufenlose Schwenkung bewirkend ausgebildet sind, ist der Bediener nicht auf bestimmte Einstellungen beschränkt, sondern kann die Einstellung exakt auf die entsprechenden Bedingungen abstimmen.

Insbesondere bei breiten Bodenbearbeitungsmaschinen mit einer Vielzahl von Striegelelementen entfällt daher bei der erfindungsgemäßen Striegeleinrichtung die Notwendigkeit, mehrere Striegelarme entlang der Breite der Bodenbearbeitungsmaschine einzeln zu verstellen. Weiterhin kann erfindungsgemäß auf spezielle Werkzeuge zur Verstellung der Höhe und/oder Winkellage verzichtet werden. Mit Vorteil kann bei der erfindungsgemäßen Striegeleinrichtung auf Fixiermittel zur Fixierung einer eingestellten Position des jeweiligen Striegelschwenkarms verzichtet werden.

Die technische Wirkung der vorliegenden Erfindung besteht demnach darin, dass durch mindestens ein Stellmittel, welches hydraulisch, elektrisch oder pneumatisch angetrieben ist, eine, insbesondere gemeinsame, Winkelneigungsverstellung der, insbesondere aller, Striegelelemente beziehungsweise der Striegelschwenkarme erfolgt.

Durch eine einzige Winkeleinstellvorrichtung lassen sich der Neigungswinkel und/oder die Höhe eines Striegelbalkens demnach deutlich schneller verstellen als im Stand der Technik.

Die Bedienung der Striegeleinrichtung erfolgt über eine Steuerung an der Bodenbearbeitungsvorrichtung oder ferngesteuert von der Schlepperkabine aus.

Gemäß der Erfindung ist vorgesehen, dass das Stellmittel ein einziges Antriebsmittel zur Schwenkung der mehreren Striegelschwenkarme der Striegeleinrichtung umfasst. Insbesondere durch Vorsehen eines Getriebes wird es damit ermöglicht, mit nur einem einzigen Antrieb gleichzeitig beziehungsweise gemeinsam die Striegelelemente beziehungsweise die Striegelschwenkarme in die gewünschte beziehungsweise benötigte Stellung zu verstellen.

Die Stellmittel weisen zur gemeinsamen Schwenkung der mehreren Striegelschwenkarme eine, insbesondere einzige, um eine quer zur Fahrtrichtung F verlaufende Rotationsachse R rotierbare Stellstange auf, wobei die Antriebsmittel die Rotierung der Stellstange bewirkend ausgebildet sind. Die Stellstange wirkt dabei als Teil eines Getriebes zwischen dem Antriebsmittel und dem/den Striegelschwenkarm(en). Vorteil der Stellstange ist es insbesondere, dass eine Übertragung der Antriebskraft zumindest entlang einer Teilbreite der Bodenbearbeitungsvorrichtung auf einfache und platzsparende Weise verwirklicht ist.

Erfindungsgemäss weisen die Stellmittel exzentrisch mit der Stellstange rotierende, an der Stellstange ohne Freiheitsgrad fixierte, jedem Striegelschwenkarm zugeordnete Stellglieder zur Bewirkung der Schwenkung des zugeordneten Striegelschwenkarms auf. Durch die exzentrische Anordnung der Stellglieder kann die Rotationsbewegung der Stellstange in eine translatorische Bewegung der Striegelschwenkarme umgesetzt werden.

Indem die Stellmittel ein entgegen der Gewichtskraft des Striegelschwenkarms wirkendes, die Schwenkung um die Schwenkachse bewirkendes Drehmoment erzeugend ausgebildet sind, braucht für die Schwenkung des Striegelschwenkarms in Richtung des Ackerbodens praktisch keine Energie aufgewendet werden.

Zusätzliche Bauteile werden dadurch eingespart, dass die Stellmittel dabei ausschließlich entgegen der Gewichtskraft des/jedes Striegelschwenkarms wirkend ausgebildet sind.

Soweit die Striegeleinrichtung, insbesondere an jedem Striegelschwenkarm, eine Rückholfederung zur Begrenzung und Rückholung einer, insbesondere entgegen der Gewichtskraft des Striegelschwenkarms freien, Schwenkbewegung aufweist, wird ein Überreagieren oder Beschädigen der Striegeleinrichtung beim Überfahren von Bodenunebenheiten verhindert. Weiterhin wird dadurch sichergestellt, dass nach Überfahren der Bodenunebenheit die Striegel schnellstmöglich wieder in ihre Idealposition zurückkehren.

Dabei ist es insbesondere von Vorteil, wenn die Rückholfederung an einem Federende an dem jeweiligen Stellglied angebracht ist. Hierdurch wird die Kinematik des Stellglieds durch die Rückholfederung unterstützt, so dass die Rückholfederung eine Doppelfunktion übernimmt.

Gemäß einer weiteren, vorteilhaften Ausführungsform der Erfindung ist vorgesehen, dass die Stellmittel einen, insbesondere elektronischen, Regelkreis zur Regelung der Schwenkung in Abhängigkeit von, insbesondere durch Sensoren erfassten, Stellgrößen aufweist. Auf diese Weise wird ein höherer Automatisierungsgrad erreicht, so dass der Bediener sich im Optimalfall überhaupt nicht mehr um die Einstellung der Striegelelemente zu kümmern braucht.

Als eigenständige Erfindung ist eine landwirtschaftliche Bodenbearbeitungsvorrichtung mit mindestens einer vorbeschriebenen Striegeleinrichtung vorgesehen, insbesondere einer Striegeleinrichtung an jedem Schararm zur Anbringung einer Vielzahl von Säscharen.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Figur 1a: eine perspektivische Ansicht auf eine Striegeleinrichtung, die an einem Schararm einer landwirtschaftlichen Bodenbearbeitungsvorrichtung angebracht ist,
- Figur 1b: eine vergrößerte Ansicht der Stellmittel aus Figur 1a in einer ersten, abgesenkten Betriebsposition,
- Figur 1c: eine weitere, vergrößerte Ansicht der Stellmittel aus Figur 1a in einer abgesenkten Betriebsposition und
- Figur 2: eine perspektivische Ansicht der Stellmittel in einer zweiten, angehobenen Betriebsposition.

In den Figuren sind gleiche Bauteile und Bauteile mit der gleichen Funktion mit den gleichen Bezugszeichen gekennzeichnet.

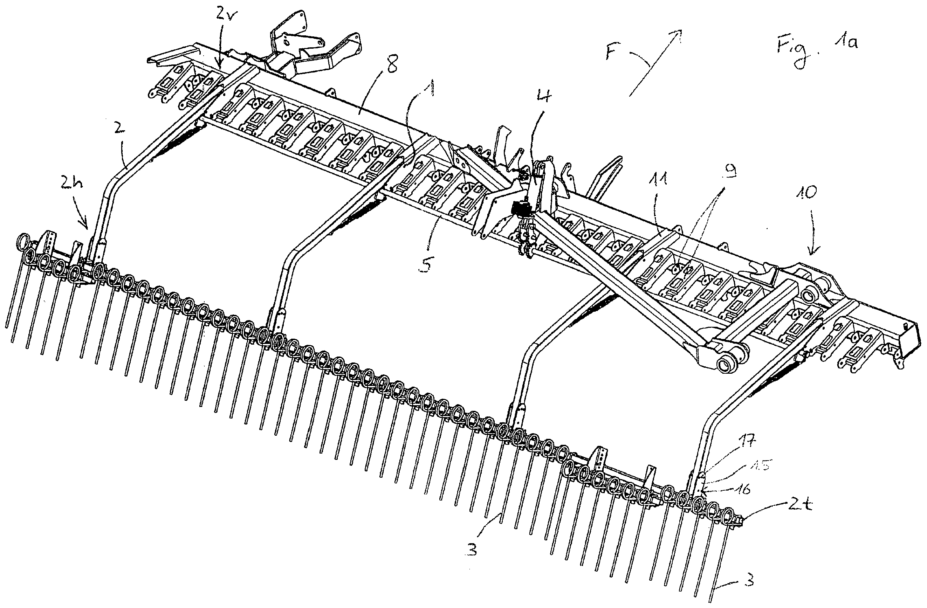

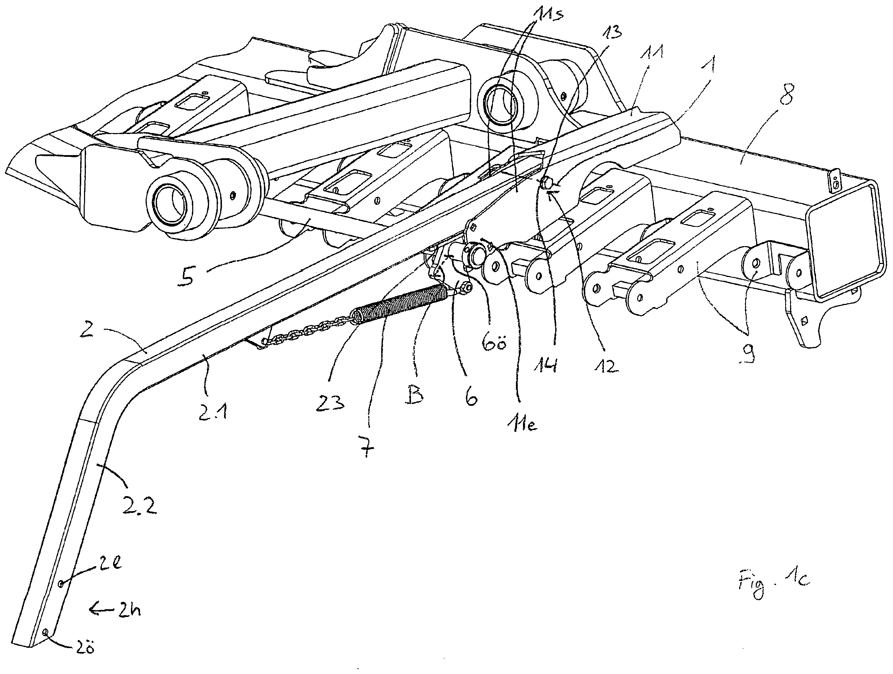

Figur 1a zeigt einen Schararm 8 mit einer Vielzahl von Scharhaltern 9, an welchen Säschare (nicht dargestellt) angebracht werden.

Der Schararm 8 (beziehungsweise zwei seitlich gegenüberliegende, korrespondierende Schararme 8) ist bei der gezeigten, klappbaren Ausführungsform über eine Schararmhalterung 10 schwenkbar an einem Gestell (nicht dargestellt) einer landwirtschaftlichen Bodenbearbeitungsvorrichtung angebracht. Bei kurzen Bodenbearbeitungsvorrichtungen ist der Schararm 8 direkt am Gestell angebracht.

Die Säschare verlaufen von dem Schararm 8 entgegen einer Fahrtrichtung F der landwirtschaftlichen Bodenbearbeitungsvorrichtung und am Schararm 8 sind außerdem die Säschare überragende Striegelschwenkarme 2 angebracht.

Die Striegelschwenkarme 2 sind an ihrem vorderen Ende 2v an dem Schararm 8 fixiert und erstrecken sich in der Fahrtrichtung F parallel zu den Scharhaltern 9 über die Säschare hinweg bis zu einem hinteren Ende 2h. An dem hinteren Ende 2h sind in Richtung des Ackerbodens angewinkelt mehrere Striegelelemente 3 an jedem Striegelschwenkarm 2, nämlich an einem Querträger 2t des Striegelschwenkarms 2, angebracht.

Die Anbringung des Striegelschwenkarms 2 an dem Schararm 8 erfolgt über einen Striegelschwenkarmhalter 11, der am Schararm 8, insbesondere ohne Freiheitsgrad, vorzugsweise angeschweißt, fixiert ist.

Der Striegelschwenkarm 2 ist an seinem vorderen Ende 2v gegenüber dem Schararm 8 in einer am Striegelschwenkarmhalter 11 angeordneten Schwenkachse 1 schwenkbar, die quer zur Fahrtrichtung F und parallel zum Verlauf des Schararms 8 angeordnet ist.

Die Schwenkachse 1 wird gebildet durch ein Schwenkgelenk 12, das aus einem Schwenkstift 13 und zwei gegenüberliegend in Seitenwänden 11s des Striegelschwenkarmhalters 11 angeordneten, den Schwenkstift 13 aufnehmenden Schwenklagern 14, insbesondere in Form von Öffnungen, vorgesehen ist. Der Schwenkstift 13 durchsetzt den Striegelschwenkarm 2 an dessen vorderen Ende 2v.

Der Striegelschwenkarm 2 besteht aus einem ersten, vom vorderen Ende 2v entgegen der Fahrtrichtung F verlaufenden Hohlprofilabschnitt 2.1, der zur Überbrückung der Strecke von der Schwenkachse 1 bis über die Säschare hinweg dient. An dem der Schwenkachse 1 gegenüberliegenden Ende des Hohlprofilabschnitts 2.1 ist ein zweiter Hohlprofilabschnitt 2.2 vorgesehen, der vom ersten Hohlprofilabschnitt 2.1 entgegen der Fahrtrichtung F schräg nach unten verläuft. Der zweite Hohlprofilabschnitt 2.2 dient zur Anbringung des Querträgers 2t an dem Striegelschwenkarm 2.

Der erste Hohlprofilabschnitt 2.1, der zweite Hohlprofilabschnitt 2.2 und der Querträger 2t weisen gegeneinander keinen Freiheitsgrad auf, wobei die Anbringung des Querträgers 2t an dem zweiten Hohlprofilabschnitt 2.2 durch zwei seitlich angebrachte Lochbleche 15 erfolgt. Indem die Lochbleche 15 mit Öffnungen 2ö des Striegelschwenkarms 2 ein Schwenkgelenk 16 bilden und jeweils drei korrespondierende Fixierlöcher 17 aufweisen, kann der Querträger 2t durch zweite Öffnungen 2l in drei Winkellagen gegenüber dem zweiten Hohlprofilabschnitt 2.2 angebracht werden. Es ist somit eine Verstellung in drei Stufen möglich. Erfindungsgemäß ist es besonders vorteilhaft, dass an dem Striegelschwenkarmhalter 11, insbesondere in Fahrtrichtung hinter der Schwenkachse 1, eine Stellstange 5 um eine Rotierachse R rotierbar angebracht ist. Die Stellstange 5 erstreckt sich parallel zu dem Schararm 8 und wird von, insbesondere von allen, Striegelschwenkarmhaltern 11 rotierbar (insbesondere mit einem einzigen Freiheitsgrad) gehalten. Hierzu ist an einen entgegen der Fahrtrichtung F angeordneten Ende 11e des Striegelschwenkarmhalters 11 ein Rotationslager 18 vorgesehen. Das Rotationslager 18 besteht aus je einer die Stellstange 5 zumindest überwiegend umschlingenden kreisförmigen Öffnung der Seitenwände 11s.

Die Stellstange 5 wird durch Antriebsmittel 4 in Rotation versetzt, wobei die Antriebsmittel 4 an dem Schararm 8 und/oder der Schararmhalterung 10 angebracht sind.

Die Antriebsmittel 4 bestehen im gezeigten Ausführungsbeispiel aus einem Hydraulikzylinder 19, der insbesondere an die Hydraulik der landwirtschaftlichen Bodenbearbeitungsvorrichtung beziehungsweise des Schleppers anschließbar ist.

Weiterhin bestehen die Antriebsmittel 4 aus einem abtriebsseitig des Hydraulikzylinders 19 angebrachten Getriebe 20 zur Umsetzung der translatorischen Bewegung des Hydraulikzylinders 19 in eine Rotation der Stellstange 5.

Zur Begrenzung des Hubs des Hydraulikzylinders 19 sind Begrenzungsmittel 21 in Form von aufsetzbaren Anschlagsplatten 22 vorgesehen.

Die Stellstange 5 verläuft unterhalb und quer zu den Striegelschwenkarmen 2 und im Bereich der Striegelschwenkarme 2 sind an der Stellstange 5 jeweils Stellglieder 6 ohne Freiheitsgrad in Rotationsrichtung der Stellstange 5, insbesondere vollständig ohne Freiheitsgrad, angebracht. Die Stellglieder 6 werden von der Stellstange 5 exzentrisch in einer Öffnung 6ö der Stellglieder 6 durchsetzt.

Im Bereich der Stellglieder 6 liegen die Striegelschwenkarme 2 jeweils mit Ihrer Unterseite 2u auf, wobei vorzugsweise eine verschleißarme, insbesondere aus gehärtetem Material bestehende, Platte 23 an der Unterseite 2u angebracht ist.

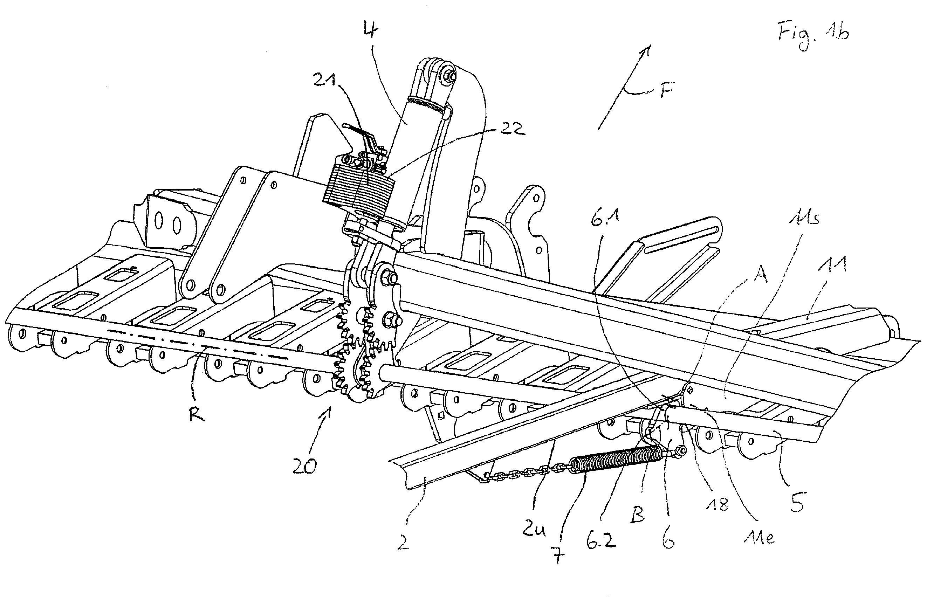

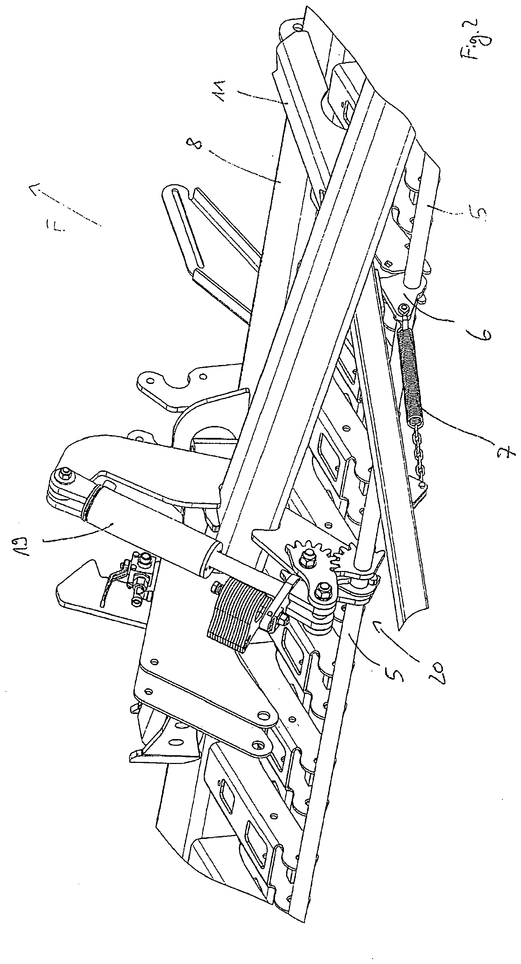

Bei Rotation der Stellstange 5 von der in Figur 1b gezeigten abgesenkten Position des Striegelschwenkarms 2 in die in Figur 2 gezeigte angehobene Position des Striegelschwenkarms 2 werden die Striegelschwenkarme 2 durch die Form der Stellglieder 6 und die exzentrische Anbringung auf der Stellstange 5 angehoben.

In der abgesenkten Position gemäß Figur 1b liegt der Striegelschwenkarm 2 in einem ersten Umfangsabschnitt 6.1 des Stellglieds 6 auf, der einen Abstand A von der Öffnung 6ö aufweist.

In der in Figur 2 gezeigten, angehobenen Position liegt der Striegelschwenkarm 2 an einem zweiten Umfangsabschnitt 6.2 des Stellglieds 6 auf, der einen Abstand B von der Öffnung 6ö hat.

Der Abstand des Umfangs vom ersten Umfangsabschnitt 6.1 bis zum zweiten Umfangsabschnitt 6.2 zu der Öffnung 6ö nimmt von dem, insbesondere minimalen, Abstand A bis zum Abstand B zu, so dass bei einer Rotation entlang des Umfangs von der in Figur 1b gezeigten Position zu der in Figur 2 gezeigten angehobenen Position zunimmt und hierdurch der Striegelschwenkarm 2 während der Rotation der Stellstange 5 kontinuierlich angehoben wird.

Die Rückstellung erfolgt durch entgegengesetzte Rotation und wird unterstützt durch das Gewicht des Striegelschwenkarms 2 und der daran angebrachten Striegelelemente 3.

Da die Striegelschwenkarme 2 auf den Stellgliedern 6 jeweils nur aufliegen, können die Striegelschwenkarme 2 unabhängig voneinander bei Überfahren von Unebenheiten nach oben ausweichen, wobei zur Rückholung der Striegelschwenkarme 2 nach Überfahren des Hindernisses Rückholfedern 7 zwischen dem Striegelschwenkarm 2 und dem Stellglied 6 angebracht sind. Die Fixierung der Rückholfeder 7 erfolgt erfindungsgemäß an der Unterseite 2u des Striegelschwenkarms 2 in Fahrtrichtung F hinterhalb des Stellglieds 6.

Es ist erfindungsgemäß denkbar, dass die Striegelschwenkarme 2 in der abgesenkten Position nicht auf den Stellgliedern 6 aufliegen, so dass die Striegelschwenkarme 2 nur durch die Rückholfeder 7 in Striegelposition gehalten werden.

### Bezugszeichenliste

- 1: Schwenkachse
- 2: Striegelschwenkarm
- 2h: hinteres Ende
- 2v: vorderes Ende
- 2ö: Öffnungen
- 2l: Öffnungen
- 2u: Unterseite
- 2t: Querträger
- 2.1: erster Hohlprofilabschnitt
- 2.2: zweiter Hohlprofilabschnitt
- 3: Striegelelemente
- 4: Antriebsmittel
- 5: Stellstange
- 6: Stellglieder
- 6.1: erster Umfangsabschnitt
- 6.2: zweiter Umfangsabschnitt
- 6ö: Öffnungen
- 7: Rückholfeder
- 8: Schararm
- 9: Scharhalter
- 10: Schararmhalterung
- 11: Striegelschwenkarmhalter
- 11e: Ende
- 11s: Seitenwand
- 12: Schwenkgelenk
- 13: Schwenkstift
- 14: Schwenklager
- 15: Lochbleche
- 16: Schwenkgelenk
- 17: Fixierlöcher
- 18: Rotationslager
- 19: Hydraulikzylinder
- 20: Getriebe
- 21: Begrenzungsmittel
- 22: Anschlagplatten
- 23: Platte
- F: Fahrtrichtung
- R: Rotationsachse
- A: Abstand
- B: Abstand

## Patentansprüche

1. Striegeleinrichtung für eine landwirtschaftliche Bodenbearbeitungsvorrichtung, insbesondere eine Sämaschine, mit folgenden Merkmalen:
- mehrere gegenüber der Bodenbearbeitungsvorrichtung um eine quer zu einer Fahrtrichtung (F) verlaufende Schwenkachse (1) schwenkbaren, in Fahrtrichtung (F) ausgerichteten Striegelschwenkarme (2), wobei die Schwenkachse (1) an einem in Fahrtrichtung (F) vorderen Ende (2v) der Striegelschwenkarme (2) angeordnet ist,
- mindestens ein an einem in Fahrtrichtung (F) hinteren Ende (2h) der Striegelschwenkarme (2) angebrachtes Striegelelement (3), wobei die Striegeleinrichtung mindestens ein Stellmittel mit einem einzigen Antriebsmittel (4) zur stufenlosen Schwenkung der mehreren Striegelschwenkarme (2) um dessen jeweilige Schwenkachse (1) aufweist,
wobei
die Stellmittel zur gemeinsamen Schwenkung der mehreren Striegelschwenkarme (2) eine, insbesondere einzige, um eine quer zur Fahrtrichtung (F) verlaufende Rotationsachse (R) rotierbare Stellstange (5) aufweisen, wobei die Antriebsmittel (4) die Rotierung der Stellstange (5) bewirkend ausgebildet sind, **dadurch gekennzeichnet, dass** die Stellmittel exzentrisch mit der Stellstange (5) rotierende, an der Stellstange (5) ohne Freiheitsgrad fixierte, jedem Striegelschwenkarm (2) zugeordnete Stellglieder (6) zur Bewirkung der Schwenkung des zugeordneten Striegelschwenkarms (2) aufweisen, wobei die Stellmittel ausschließlich entgegen der Gewichtskraft des/jedes Striegelschwenkarms (2) wirkend ausgebildet sind.

2. Striegeleinrichtung nach Anspruch 1, wobei die Stellmittel hydraulisch und/oder elektrisch und/oder pneumatisch angetrieben oder antreibbar ausgebildet sind.

3. Striegeleinrichtung nach einem der vorhergehenden Ansprüche, bei der die Stellmittel ein entgegen der Gewichtskraft des Striegelschwenkarms (2) wirkendes, die Schwenkung um die Schwenkachse (1) bewirkendes Drehmoment erzeugend ausgebildet sind.

4. Striegeleinrichtung nach einem der vorhergehenden Ansprüche, bei der die Striegeleinrichtung, insbesondere an jedem Striegelschwenkarm (2), eine Rückholfederung (7) zur Begrenzung und Rückholung einer, insbesondere entgegen der Gewichtskraft des Striegelschwenkarms (2) freien, Schwenkbewegung aufweist.

5. Striegeleinrichtung nach Anspruch 4, wobei die Rückholfederung (7) an einem Federende an dem jeweiligen Stellglied (6) angebracht ist.

6. Striegeleinrichtung nach einem der vorhergehenden Ansprüche, bei der die Stellmittel einen, insbesondere elektronischen Regelkreis zur Regelung der Schwenkung in Abhängigkeit von, insbesondere durch Sensoren erfassten, Stellgrößen aufweist.

7. Bodenbearbeitungsvorrichtung mit mindestens einer Striegeleinrichtung nach einem der vorhergehenden Ansprüche, insbesondere einer Striegeleinrichtung an jedem Schararm (8), zur Anbringung einer Vielzahl von Striegelelementen (3).

## Claims

1. A comb harrow apparatus for an agricultural soil cultivation device, in particular a seeder, having the following characteristics:
- a plurality of comb harrow pivot arms (2) which, with respect to the agricultural soil cultivating device, are pivotable about a pivot axis (1) extending transversely to a moving direction (F) and which are oriented in the moving direction (F), wherein the pivot axis (1) is arranged at a front end (2v) of the comb harrow pivot arms (2) in the moving direction (F),
- at least one comb harrow element (3) attached at a rear end (2h) of the comb harrow pivot arms (2) in the moving direction (F), wherein the comb harrow apparatus has at least one actuating means comprising a single drive means (4) for continuously variable pivoting of the plurality of comb harrow arms (2) about their respective pivot axis (1),
wherein the actuating means for jointly pivoting the plurality of comb harrow arms (2) have, in particular, a single actuator rod (5) that can be rotated about a rotation axis (R) which extends transversely to the moving direction (F), wherein the drive means (4) are designed such as to effect the rotation of the actuator rod (5), **characterized in that** the actuating means have actuating elements (6) which rotate eccentrically with the actuator rod (5) and are fixed on the actuator rod (5) without degree of freedom and which are associated with each comb harrow pivot arm (2), for effecting the pivoting of the associated comb harrow pivot arm (2), wherein the actuating means are formed so as to act exclusively against the weight force of the/each comb harrow pivot arm (2).

2. The comb harrow apparatus according to claim 1, wherein the actuating means are formed to be hydraulically and/or electrically and/or pneumatically driven or drivable.

3. The comb harrow apparatus according to any one of the preceding claims, wherein the actuating means are formed so as to generate a torque acting against the weight force of the comb harrow arm (2) and effecting the pivoting about the pivot axis (1).

4. The comb harrow apparatus according to any one of the preceding claims, wherein the comb harrow apparatus, in particular at each comb harrow pivot arm (2), has a return spring system (7) for limiting and returning a free pivoting movement, in particular against the weight force of the comb harrow arm (2).

5. The comb harrow apparatus according to claim 4, wherein the return spring system (7) is attached to the respective actuating element (6) at a spring end.

6. The comb harrow apparatus according to any one of the preceding claims, wherein the actuating means include, in particular, an electronic control circuit for controlling the pivoting in dependence of actuating variables that are detected, in particular, by sensors.

7. An agricultural soil cultivating device comprising at least one comb harrow apparatus according to any one of the preceding claims, in particular a comb harrow apparatus at each blade arm (8), for attaching a plurality of comb harrow elements (3).

## Revendications

1. Système d'étrillage pour un dispositif agricole de traitement du sol, notamment un semoir, avec les caractéristiques suivantes :
- plusieurs bras pivotants d'étrillage (2), orientés dans la direction de déplacement (F), susceptibles de pivoter par rapport au dispositif de traitement du sol autour d'un axe de pivotement (1) s'écoulant à la transversale de la direction de déplacement (F), l'axe de pivotement (1) étant placé sur une extrémité avant (2v) des bras pivotants d'étrillage (2), dans la direction de déplacement (F),
- au moins un élément d'étrillage (3) monté sur l'extrémité arrière (2h) des bras pivotants d'étrillage (2), dans la direction de déplacement (F), le système d'étrillage comportant au moins un moyen de réglage avec un seul moyen d'entraînement (4) pour le pivotement en continu des plusieurs bras pivotants d'étrillage (2) autour de l'axe de pivotement (1) de chacun d'eux,
pour le pivotement commun des plusieurs bras pivotants d'étrillage (2), les moyens de réglage comportant une, notamment une seule tringle de manœuvre (5) rotative autour d'un axe de rotation (R) s'écoulant à la transversale de la direction de déplacement (F), les moyens d'entraînement (4) étant conçus pour provoquer la rotation de la tringle de manœuvre (5), **caractérisé en ce que** les moyens de réglage comportent des actionneurs (6) en rotation excentrique avec la tringle de manœuvre (5), fixés de préférence sans degré de liberté sur la tringle de manœuvre (5), associés à chaque bras pivotant d'étrillage (2), pour provoquer le pivotement du bras pivotant d'étrillage (2) associé, les moyens de réglage étant conçus pour agir exclusivement à l'encontre du poids du/de chacun des bras pivotants d'étrillage (2).

2. Système d'étrillage selon la revendication 1, les moyens de réglage étant conçus en étant entraînés ou susceptibles d'être entraînés par moyen hydraulique et/ou électrique et/ou pneumatique.

3. Système d'étrillage selon l'une quelconque des revendications précédentes, sur lequel les moyens de réglage sont conçus pour créer un couple de rotation agissant à l'encontre du poids du bras pivotant d'étrillage (2), provoquant le pivotement autour de l'axe de rotation (1).

4. Système d'étrillage selon l'une quelconque des revendications précédentes, sur lequel le système d'étrillage comporte, notamment sur chaque bras pivotant d'étrillage (2) une suspension à ressort de rappel (7), destinée à limiter et à rappeler un déplacement en pivotement, notamment libre à l'encontre du poids du bras pivotant d'étrillage (2).

5. Système d'étrillage selon la revendication 4, la suspension à ressort de rappel (7) étant montée par une extrémité de ressort sur l'actionneur (6) respectif.

6. Système d'étrillage selon l'une quelconque des revendications précédentes, sur lequel les moyens de réglage comportent un circuit de réglage, notamment électronique pour régler le pivotement en fonction de grandeurs de réglage, détectées notamment par des capteurs.

7. Dispositif de traitement du sol, pourvu d'au moins un système d'étrillage selon l'une quelconque des revendications précédentes, notamment d'un système d'étrillage sur chaque bras de soc (8), destiné à monter une pluralité d'éléments d'étrillage (3).
